# EUROPÄISCHE PATENTANMELDUNG

(11) **EP 3 686 446 A1**
(43) Veröffentlichungstag der Anmeldung: **29.07.2020**
(21) Anmeldenummer: 20152618.3
(22) Anmeldetag: 20.01.2020
(51) Int. Cl.: F16B 39/30

(54) **ZWEI ZU VERBINDENDE KUNSTSTOFFBAUTEILE MIT BEFESTIGUNGSGEWINDE UND SCHRAUBENSICHERUNG**

(30) Priorität: 23.01.2019 DE 102019101562
(71) Anmelder: Thomas Magnete GmbH, 57562 Herdorf (DE)
(72) Erfinder: Winz, Remo, 53840 Troisdorf (DE); Petri, Wolfgang, 57290 Neunkirchen (DE); Schwarz, Manuel, 56477 Rennerod (DE); Hildebrand, Markus, 57562 Herdorf (DE); Bechheim, Sascha, 58515 Lüdenscheid (DE)

(57) **Zusammenfassung**

Die Erfindung betrifft eine Vorrichtung (1), aufweisend ein erstes Bauteil (2) aus Kunststoff und ein zweites Bauteil (3) aus Kunststoff, wobei die beiden Bauteile (2, 3) durch eine Gewindeverbindung (4) miteinander verschraubbar sind, und wobei das erste Bauteil (2) ein Mutterngewinde (5) und das zweite Bauteil (3) ein Schraubengewinde (6) aufweisen.

Erfindungsgemäß ist vorgesehen, dass das Schraubengewinde (6) oder eine erste an das Schraubengewinde (6) anschließende und mit diesem stofflich verbundene erste Zylinderfläche (7) mindestens ein asymmetrisches Zusatzformelement (8) aufweist, das wegen seiner Form und seiner Härte geeignet ist, bei dem Verschraubungsvorgang durch eine in Umfangsrichtung erfolgende Bewegung in das Muttergewinde (5) oder in eine daran anschließende zweite Zylinderfläche (9) einzudringen.

## Beschreibung

Die Erfindung betrifft eine Vorrichtung, die ein erstes Bauteil aus Kunststoff und ein zweites Bauteil aus Kunststoff aufweist, wobei die beiden Bauteile durch eine Gewindeverbindung miteinander verbunden sind, und wobei das erste Bauteil ein Mutterngewinde und das zweite Bauteil ein Schraubengewinde aufweist.

### Stand der Technik:

Schraubenverbindungen zwischen Bauteilen aus Kunststoff und Schraubenverbindungen zwischen Metallbauteilen einerseits und Kunststoffbauteilen andererseits sind bekannt.
Bedingt durch das Kriechvermögen beziehungsweise durch die Relaxationsfähigkeit der üblichen Kunststoffe ergeben sich Losdrehmomente der Schraubenverbindung, die über der Lebensdauer der Vorrichtung unannehmbar gering werden.
Es sind Schraubensicherungen für solche Schraubenverbindungen bekannt, aber diese (Klebstoffe, Drahtsicherungen, Verschweißungen) bedingen zusätzliche Bauteile oder zusätzliche Prozessschritte bei dem Zusammenbau und erhöhen die Kosten. Einige Schraubenverbindungen (z. B. Kleben) bergen zusätzliche Risiken im Zusammenhang mit den zusätzlichen Herstellprozessen oder mit Temperaturwechselvorgängen oder mit Medieneinflüssen im Betrieb.

Es ist Aufgabe der vorliegenden Erfindung, eine Schraubenverbindung von Kunststoffteilen, die durch ein Spritzgussverfahren herstellbar sind, zu beschreiben, die eine dauerhafte, temperatur- und medienbeständige sichere Verbindung der Bauteile gewährleistet, ohne zusätzliche Bauteile oder Prozessschritte auskommt und damit kostengünstig ist.

Die Lösung dieser Aufgabe erfolgt durch den ersten Patentanspruch sowie durch die Verfahrensansprüche 8 und 9.

Die Erfindung schließt die technische Lehre ein, dass das Schraubengewinde oder eine angrenzende und mit dem Schraubengewinde stofflich verbundene erste Zylinderfläche mindestens ein asymmetrisches Zusatzformelement aufweist, das wegen seiner Form und seiner Härte bei dem Befestigungsvorgang in das Muttergewinde oder in eine damit stofflich verbundene zweite Zylinderfläche eindringt, wobei die Relativbewegung in Umfangsrichtung der Bauteile zwischen dem Zusatzformelement und der Gegenfläche genutzt wird.
Durch dieses Eindringen des Zusatzformelements in das Gegengewinde oder die zweite Zylinderfläche ergibt sich ein Formschluss nach dem Verschraubungsvorgang und eine damit erhebliche Vergrößerung des Losdrehmoments der Gewindeverbindung, ohne den Einsatz zusätzlicher Bauteile oder Arbeitsprozesse.

Die abhängigen Ansprüche 2 bis 7 beinhalten vorteilhafte Weiterbildungen der Erfindung.

Nach einer vorteilhaften Weiterbildung ist das asymmetrische Zusatzformelement keilförmig mit unterschiedlichen Keilwinkeln α und β ausgebildet, wobei α erheblich größer ist als β.
Durch die unterschiedlichen Keilwinkel ergibt sich nur eine geringe Vergrößerung des Eindrehmoments, aber eine erheblich stärkere Vergrößerung des Losdrehmoments der Gewindeverbindung.
Die Wahl der Keilwinkel und der Anzahl der Zusatzformelemente gibt dem Konstrukteur der Gewindeverbindung zwei Freiheitsgrade zur Festlegung des Einschraub- und des Losdrehmoments der Schraubenverbindung.

Vorteilhafterweise bestehen das erste Bauteil und das zweite Bauteil aus unterschiedlichen Kunststoffen, wobei das erste Bauteil im Vergleich beider Bauteile aus einem Kunststoff mit geringerer Festigkeit und größerem plastischen Dehnungsvermögen und das zweite Bauteil aus einem Kunststoff mit höherer Festigkeit und geringerem plastischen Dehnungsvermögen besteht.

Durch die unterschiedlichen Kunststoffe können die Zusatzformelemente des zweiten Bauteils leicht in die Oberfläche des ersten Bauteils eindringen, und durch das hohe plastische Dehnungsvermögen des ersten Bauteils verstärkt sich der Formschluss zwischen den beiden Bauteilen.

Beispielsweise besteht das zweite Bauteil aus einem Kunststoff der Gattung PPS mit mindestens 25% Kohlefaserfüllung und/oder mindestens 15% Füllung mit PTFE, während beispielsweise das erste Bauteil aus einem Kunststoff der Gattung PA6T.6 mit maximal 30% Glasfaserfüllung besteht.

Vorzugsweise sind beide Bauteile urformend durch Spritzgießen ohne mechanische Nacharbeit hergestellt.

Bei der Herstellung der Schraubenverbindung werden die betreffenden Bauteile mit Gewinde durch Spritzgießen urgeformt und vorzugsweise ohne mechanische Nacharbeit dem Zusammenbau zugeführt.

### Anwendung:

Die erfindungsgemäße Gewindeverbindung wird vorzugsweise bei der Verbindung von Bauteilen von Schalt- und Proportionalventilen eingesetzt, andere Einsatzfelder sind unbenommen.

Weitere Einzelheiten, Merkmale und Vorteile der Erfindung ergeben sich aus nachfolgender Beschreibung anhand der Zeichnung.

Es zeigt:
- Figur 1: Eine Schnittdarstellung der erfindungsgemäßen Vorrichtung, ohne die Zusatzformelemente
- Figur 2: Eine Ansicht des zweiten Bauteils mit dem Schraubengewinde und einer Mehrzahl von Zusatzformelementen
- Figur 3: Eine abgewickelte Ansicht eines Zusatzformelements zur Darstellung der Keilwinkel.

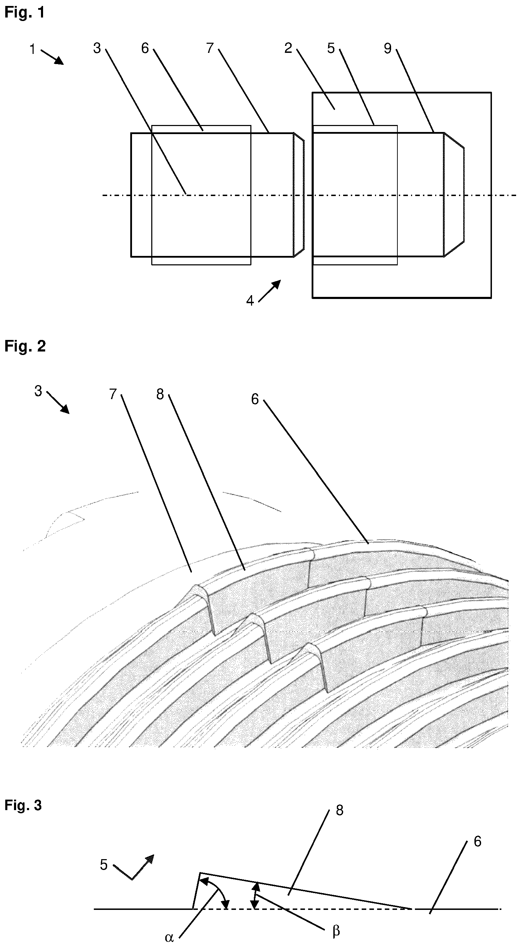

Figur 1 zeigt eine Vorrichtung (1) mit zwei zu verbindenden Bauteilen (2, 3) aus Kunststoff, wobei die beiden Bauteile (2, 3) durch eine Gewindeverbindung (4) miteinander verschraubbar sind, und wobei das erste Bauteil (2) ein Mutterngewinde (5) und das zweite Bauteil (3) ein Schraubengewinde (6) aufweist.

Wie in Fig. 2 dargestellt, weist das beispielhafte Schraubengewinde (6) mehrere asymmetrische Zusatzformelemente (8) auf, die geeignet sind, bei dem Verschraubungsvorgang durch eine in Umfangsrichtung erfolgende Bewegung in das Muttergewinde (5) einzudringen. Die an das Gewinde anschließende Zylinderfläche (7) ist auch dargestellt, allerdings ohne Zusatzformelemente (8).

Wie in Fig. 3 dargestellt, ist das asymmetrische Zusatzformelement (8) keilförmig und mit unterschiedlichen Keilwinkeln α und β ausgebildet, wobei der beim Einschrauben vorlaufende Keilwinkel β erheblich kleiner ist als der nachlaufende Keilwinkel α. Die Keilwinkel sind in einer Abwicklung dargestellt.

Vorzugsweise sind das erste Bauteil (2) und das zweite Bauteil (3) urformend durch Spritzgießen ohne mechanische Nacharbeit hergestellt.

Die vorhergehende Beschreibung gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

### Bezugszeichenliste

- 1: Vorrichtung
- 2: Bauteil
- 3: Bauteil
- 4: Gewindeverbindung
- 5: Mutterngewinde
- 6: Schraubengewinde
- 7: Zylinderfläche
- 8: Zusatzformelement
- 9: Zylinderfläche
- α: erster Keilwinkel
- β: zweiter Keilwinkel

## Patentansprüche

1. Vorrichtung (1) aufweisend ein erstes Bauteil (2) aus Kunststoff und ein zweites Bauteil (3) aus Kunststoff, wobei die beiden Bauteile (2, 3) durch eine Gewindeverbindung (4) miteinander verschraubbar sind, und wobei das erste Bauteil (2) ein Mutterngewinde (5) und das zweite Bauteil (3) ein Schraubengewinde (6) aufweisen,
**dadurch gekennzeichnet, dass**
das Schraubengewinde (6) oder eine erste an das Schraubengewinde (6) anschließende und mit diesem stofflich verbundene erste Zylinderfläche (7) mindestens ein asymmetrisches Zusatzformelement (8) aufweist, das wegen seiner Form und seiner Härte geeignet ist, bei dem Verschraubungsvorgang durch eine in Umfangsrichtung erfolgende Bewegung in das Muttergewinde (5) oder in eine daran anschließende zweite Zylinderfläche (9) einzudringen.

2. Vorrichtung (1) nach Anspruch 1, **dadurch gekennzeichnet, dass** das asymmetrische Zusatzformelement (8) keilförmig und mit unterschiedlichen Keilwinkeln α und β, zu messen in der Bewegungsrichtung bei dem Vorgang der Verschraubung, ausgebildet ist, wobei der beim Einschrauben vorlaufende Keilwinkel β erheblich kleiner ist als der nachlaufende Keilwinkel α.

3. Vorrichtung (1) nach einem der vorstehenden Ansprüche, **dadurch gekennzeichnet, dass** das erste Bauteil (2) und das zweite Bauteil (3) aus unterschiedlichen Kunststoffen bestehen, wobei im Vergleich der Bauteile (2, 3) das erste Bauteil (2) aus einem Kunststoff mit geringerer Festigkeit und größerem plastischen Dehnungsvermögen und das zweite Bauteil (3) aus einem Kunststoff mit höherer Festigkeit und geringerem plastischen Dehnungsvermögen besteht.

4. Vorrichtung (1) nach Anspruch 3, **dadurch gekennzeichnet, dass** das zweite Bauteil (3) aus einem Kunststoff der Gattung PPS mit mindestens 25% Kohlefaserfüllung und/oder mindestens 15% Füllung mit PTFE besteht.

5. Vorrichtung (1) nach Anspruch 3 oder 4, **dadurch gekennzeichnet, dass** das erste Bauteil (2) aus einem Kunststoff der Gattung PA6T.6 mit maximal 30% Füllung mit Glasfasern besteht.

6. Vorrichtung (1) nach einem der vorstehenden Ansprüche, **dadurch gekennzeichnet, dass** das erste Bauteil (2) urformend durch Spritzgießen ohne mechanische Nacharbeit hergestellt ist.

7. Vorrichtung (1) nach einem der vorstehenden Ansprüche, **dadurch gekennzeichnet, dass** das zweite Bauteil (3) urformend durch Spritzgießen ohne mechanische Nacharbeit hergestellt ist.

8. Verfahren zur Herstellung und zum Zusammenbau einer Vorrichtung (1), aufweisend ein erstes Bauteil (2) aus Kunststoff und ein zweites Bauteil (3) aus Kunststoff, wobei das erste Bauteil (2) ein Mutterngewinde (5) und das zweite Bauteil (3) ein Schraubengewinde (6) aufweist
**dadurch gekennzeichnet, dass**
die beiden Bauteile (2, 3) aus unterschiedlichen Kunststoffen jeweils urformend durch Spritzgießen hergestellt werden,
und dass die beiden Bauteile (2, 3) durch eine Gewindeverbindung (4) miteinander verschraubt werden, wobei mindestens ein asymmetrisches Zusatzformelement (8) des Schraubengewindes (6) in das Mutterngewinde (5) eindringt.

9. Verfahren zur Herstellung und zum Zusammenbau einer Vorrichtung (1), aufweisend ein erstes Bauteil (2) aus Kunststoff und ein zweites Bauteil (3) aus Kunststoff, wobei das erste Bauteil (2) ein Mutterngewinde (5) und das zweite Bauteil (3) ein Schraubengewinde (6) aufweist
**dadurch gekennzeichnet, dass**
die beiden Bauteile (2, 3) aus unterschiedlichen Kunststoffen jeweils urformend durch Spritzgießen hergestellt werden,
und dass die beiden Bauteile (2, 3) durch eine Gewindeverbindung (4) miteinander verbunden werden, wobei mindestens ein asymmetrisches Zusatzformelement (8) einer an das Schraubengewinde (6) anschließenden und mit diesem stofflich verbundenen ersten Zylinderfläche (7) in eine an das Mutterngewinde (5) anschließende zweite Zylinderfläche (9) eindringt.
